# EUROPÄISCHE PATENTSCHRIFT

(11) **EP 3 672 853 B1**
(45) Veröffentlichungstag und Bekanntmachung des Hinweises auf die Patenterteilung: **08.09.2021**
(21) Anmeldenummer: 18742970.9
(22) Anmeldetag: 12.07.2018
(51) Int. Cl.: B60T 13/58, B60T 13/66

(54) **STEUERVORRICHTUNG UND VERFAHREN ZUM BETREIBEN EINER FAHRZEUGVERZÖGERUNGSVORRICHTUNG EINES FAHRZEUGS**
CONTROLLER AND METHOD OF CONTROLING A VEHICLE RETARDER
CONTRÔLEUR ET PROCÉDÉ DE CONTRÔLE D'UN FREIN PERMANENT

(30) Priorität: 22.08.2017 DE 102017214602
(43) Veröffentlichungstag der Anmeldung: 01.07.2020
(73) Patentinhaber: Robert Bosch GmbH, 70442 Stuttgart (DE)
(72) Erfinder: BRUEX, Thomas, 74343 Sachsenheim-Kleinsachsenheim (DE); MANNHERZ, Edith, 74189 Weinsberg (DE); STAACK, Julian, 74360 Ilsfeld-Auenstein (DE); KUNZ, Michael, Plymouth 48170 (US)
(86) Internationale Anmeldenummer: PCT/EP2018/068896
(87) Internationale Veröffentlichungsnummer: WO 2019/037941

(56) Entgegenhaltungen:
- WO-A1-2007/012354
- CN-A- 101 566 200
- DE-A1- 4 136 759
- DE-A1-102004 048 120
- DE-B3-102014 206 649

## Beschreibung

Die Erfindung betrifft eine Steuervorrichtung für eine Fahrzeugverzögerungsvorrichtung eines Fahrzeugs. Ebenso betrifft die Erfindung eine Fahrzeugverzögerungsvorrichtung für ein Fahrzeug. Des Weiteren betrifft die Erfindung ein Verfahren zum Betreiben einer Fahrzeugverzögerungsvorrichtung eines Fahrzeugs.

### Stand der Technik

In der DE 20 2010 017 605 U1 ist eine Steuerung eines elektromechanischen Bremskraftverstärkers offenbart, welche den elektromechanischen Bremskraftverstärker unter Berücksichtigung von Signalen einer Sensoreinrichtung, mittels welcher ein Verschiebeweg eines Eingangselements bestimmbar ist, und einer in der Steuerung hinterlegten Kennlinie ansteuert. Durch das Ansteuern des elektromechanischen Bremskraftverstärkers soll eine mittels des elektromechanischen Bremskraftverstärkers bewirkte Unterstützungskraft gemäß der Kennlinie einstellbar sein.

Die CN 101 566 200 A und DE 10 2004 048120 A1 beschreiben außerdem eine Steuerung für einen Retarder,
wobei die Steuerung dazu ausgelegt sein soll, einen Druck einer Dauerbremsflüssigkeit des Retarders derart einzustellen, dass eine mittels des Retarders erzielte Verzögerung einem vorgegebenen Standard entspricht.

### Offenbarung der Erfindung

Die Erfindung schafft eine Steuervorrichtung für eine Fahrzeugverzögerungsvorrichtung eines Fahrzeugs mit den Merkmalen des Anspruchs 1, eine Fahrzeugverzögerungsvorrichtung für ein Fahrzeug mit den Merkmalen des Anspruchs 8 und ein Verfahren zum Betreiben einer Fahrzeugverzögerungsvorrichtung eines Fahrzeugs mit den Merkmalen des Anspruchs 10.

### Vorteile der Erfindung

Die vorliegende Erfindung schafft Möglichkeiten zur selbstlernenden Anpassung einer Kennlinie einer Fahrzeugverzögerungsvorrichtung an Präferenzen eines Fahrers eines mit der jeweiligen Fahrzeugverzögerungsvorrichtung ausgestatteten Fahrzeugs/Kraftfahrzeugs. Dazu können mittels der vorliegenden Erfindung von dem Fahrer als persönlich unpassend empfundene Parameter/Charakteristiken der Kennlinie anhand der durch den Fahrer ausgelösten Modulationen und/oder Schwankungen der Eingangsgröße erkannt und mittels einer Änderung der jeweiligen Parameter/Charakteristiken der Kennlinie fahrerfreundlicher neu festgelegt werden. Insbesondere kann auf diese Weise die von dem Fahrer als persönlich bevorzugt empfundene Kennlinie erkannt und anschließend mittels einer entsprechenden Ansteuerung der Fahrzeugverzögerungsvorrichtung umgesetzt werden. Die vorliegende Erfindung trägt damit signifikant zur Steigerung eines Bremskomforts des das zugeordnete Bremsbetätigungselement betätigenden Fahrers bei.

In einer vorteilhaften Ausführungsform der Steuervorrichtung ist die Elektronikeinrichtung zusätzlich dazu ausgelegt, eine Häufigkeit und/oder eine Modulationsstärke von durch den Fahrer ausgelösten Modulationen und/oder Schwankungen während mindestens einer Bremsung zu bestimmen. Anschließend kann die Elektronikeinrichtung unter Berücksichtigung der festgelegten Häufigkeit und/oder der festgelegten Modulationsstärke die Kennlinie hinsichtlich der Präferenzen des Fahrers verbessern.

Beispielsweise kann, sofern die bestimmte Häufigkeit zumindest abschnittsweise entlang der Kennlinie über einem vorgegebenen Häufigkeits-Schwellwert liegt und/oder die bestimmte Modulationsstärke zumindest abschnittsweise entlang der Kennlinie über einem vorgegebenen Stärkeschwellwert liegt, die Elektronikeinrichtung dazu ausgelegt sein, zumindest den mindestens einen betreffenden Teilabschnitt der Kennlinie neu festzulegen und die entsprechend geänderte Kennlinie auf der Speichereinrichtung abzuspeichern. Auf diese Weise kann anhand der bestimmten Häufigkeit und/oder der bestimmten Modulations-stärke "gelernt" werden, welche Präferenzen der Fahrer bezüglich der Kennlinie hat.

In einer alternativen Ausführungsform der Steuervorrichtung kann die Elektronikeinrichtung zusätzlich dazu ausgelegt sein, für mindestens eine erste Kennlinie mindestens eine erste Häufigkeit und/oder mindestens eine erste Modulationsstärke während mindestens einer ersten Bremsung zu bestimmen, für eine zweite Kennlinie, welche im Vergleich zu der mindestens einen ersten Kennlinie jeweils zumindest einen neu-festgelegten Teilabschnitt aufweist, eine zweite Häufigkeit und/oder eine zweite Modulationsstärke während mindestens einer zweiten Bremsung zu bestimmen, die mindestens eine erste Häufigkeit und/oder die mindestens eine erste Modulationsstärke mit der zweiten Häufigkeit und/oder der zweiten Modulationsstärke zu vergleichen, und, sofern zumindest abschnittsweise entlang der zweiten Kennlinie eine Zunahme von Modulationen und/oder Schwankungen der Eingangs-Größe anhand der miteinander verglichenen Häufigkeiten und/oder zumindest abschnittsweise entlang der zweiten Kennlinie eine Verstärkung von Modulationen und/oder Schwankungen der Eingangsgröße anhand der miteinander verglichenen Modulationsstärken feststellbar ist, zumindest den mindestens einen betreffenden Teilabschnitt der zweiten Kennlinie neu festzulegen. Auch diese Ausführungsform der Steuervorrichtung ist zur gezielten Anpassung der Kennlinie an Präferenzen des Fahrers geeignet.

Bevorzugter Weise ist die Elektronikeinrichtung dazu ausgelegt, einen zeitlichen Verlauf eines Pedalwegs, einen zeitlichen Verlauf eines Eingangsstangenwegs, einen zeitlichen Verlauf eines Differenzwegs, einen zeitlichen Verlauf einer auf das Bremsbetätigungselement ausgeübten Fahrerbremskraft und/oder einen zeitlichen Verlauf eines Hauptbremszylinderdrucks in einem dem Bremsbetätigungselement nachgeordneten Hauptbremszylinder als den zeitlichen Verlauf der Eingangsgröße auf ein eventuelles Auftreten von mindestens einer durch den Fahrer ausgelösten Modulation und/oder Schwankung der Eingangs-Größe zu untersuchen. Der Fahrer moduliert bei einer für ihn persönlich unpassenden Kennlinie der Fahrzeugverzögerungsvorrichtung im Verlauf einer Bremsung mehrfach und signifikant seine Betätigung des Bremsbetätigungselements. Diese mehrfachen und signifikanten Modulationen/Schwankungen (welche häufig auch als Fahrermodulationen bezeichnet werden) können mittels der hier genannten Beispiele für die Eingangs-Größe verlässlich erkannt werden.

Beispielsweise kann die Kennlinie eine Relation zwischen der Eingangsgröße und einer an einen dem Hauptbremszylinder vorgelagerten Bremskraftverstärker auszugebenden Sollstromstärke, eine Relation zwischen der Eingangsgröße und einer Solldrehzahl eines Motors des Bremskraftverstärkers, eine Relation zwischen der Eingangsgröße und einer Sollverstärkerkraft des Bremskraftverstärkers, eine Relation zwischen der Eingangsgröße und einem Sollbremsdruck in mindestens einem Radbremszylinder eines hydraulischen Bremssystems, eine Relation zwischen der Eingangsgröße und einem SollBremsmoment des mindestens einen Radbremszylinders und/oder eine Relation zwischen der Eingangsgröße und der Sollfahrzeugverzögerung vorgeben. Die hier beschriebene Erfindung eignet sich gut zur selbstlernenden Anpassung aller hier aufgezählten Kennlinientypen an die Präferenzen des Fahrers. Es wird jedoch darauf hingewiesen, dass eine Verwendbarkeit der vorliegenden Erfindung nicht auf die hier genannten Kennlinientypen limitiert ist.

Vorzugsweise ist die Elektronikeinrichtung dazu ausgelegt, unter Berücksichtigung der Kennlinie und der aktuellen Eingangsgröße den dem Hauptbremszylinder vorgelagerten Bremskraftverstärker, mindestens eine Kolben-Zylinder-Vorrichtung des hydraulischen Bremssystems und/oder mindestens eine Pumpe des hydraulischen Bremssystems als die Fahrzeugverzögerungsvorrichtung anzusteuern. Die Steuervorrichtung kann somit für eine Vielzahl verschiedener Typen von Fahrzeugverzögerungsvorrichtungen genutzt werden. Die Verwendbarkeit der Steuervorrichtung ist jedoch nicht auf die hier aufgezählten Fahrzeugverzögerungsvorrichtungen beschränkt.

Auch eine Fahrzeugverzögerungsvorrichtung für ein Fahrzeug mit einer entsprechenden Steuervorrichtung bewirkt die vorausgehend beschriebenen Vorteile. Die Fahrzeugverzögerungsvorrichtung kann beispielsweise der Bremskraftverstärker, die Kolben-Zylinder-Vorrichtung, ein Pumpensystem mit der mindestens einen Pumpe oder das z.B. hydraulische, pneumatische oder elektrische Bremssystem sein. Weitere Beispiele für die Fahrzeugverzögerungsvorrichtung sind möglich.

Des Weiteren schafft auch ein Ausführen eines korrespondierenden Verfahrens zum Betreiben einer Fahrzeugverzögerungsvorrichtung eines Fahrzeugs die oben genannten Vorteile. Es wird ausdrücklich darauf hingewiesen, dass das Verfahren zum Betreiben einer Fahrzeugverzögerungsvorrichtung eines Fahrzeugs gemäß den oben erläuterten Ausführungsformen der Steuervorrichtung weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1c: Koordinatensysteme zum Erläutern einer Funktionsweise einer Ausführungsform der Steuervorrichtung für eine Fahrzeugverzögerungsvorrichtung eines Fahrzeugs;
- Fig. 2: ein Flussdiagramm zum Erläutern einer ersten Ausführungsform des Verfahrens zum Betreiben einer Fahrzeugverzögerungsvorrichtung eines Fahrzeugs;
- Fig. 3: ein Flussdiagramm zum Erläutern einer zweiten Ausführungsform des Verfahrens zum Betreiben einer Fahrzeugverzögerungsvorrichtung eines Fahrzeugs; und
- Fig. 4: ein Flussdiagramm zum Erläutern einer dritten Ausführungsform des Verfahrens zum Betreiben einer Fahrzeugverzögerungsvorrichtung eines Fahrzeugs.

### Ausführungsformen der Erfindung

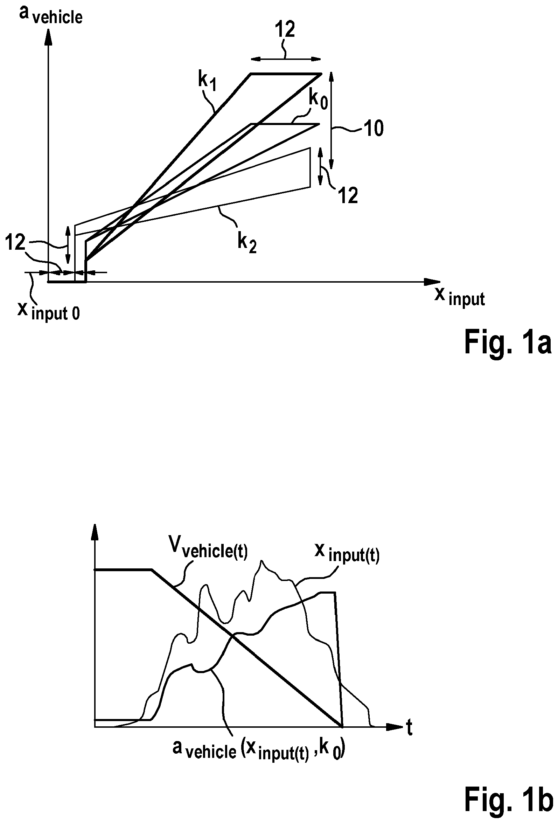

Fig. 1a bis 1c zeigen Koordinatensysteme zum Erläutern einer Funktionsweise einer Ausführungsform der Steuervorrichtung für eine Fahrzeugverzögerungsvorrichtung eines Fahrzeugs.

Die mittels der Koordinatensysteme der Fig. 1a bis 1c im Weiteren erläuterte Steuervorrichtung weist eine Elektronikeinrichtung auf, welche derart an ein Bremsbetätigungselement des Fahrzeugs und/oder an mindestens einen Bremsbetätigungselementsensor des Fahrzeugs anbindbar/angebunden ist, dass ein zeitlicher Verlauf einer von einem Fahrer des Fahrzeugs mittels einer Betätigung des Bremsbetätigungselements vorgegebenen Eingangsgröße xᵢₙₚᵤₜ mittels der Elektronikeinrichtung auswertbar ist. Dazu kann die Steuervorrichtung derart an das Bremsbetätigungselement und/oder den mindestens einen Bremsbetätigungselementsensor elektrisch anbindbar/angebunden sein, dass der zeitliche Verlauf der Eingangsgröße xᵢₙₚᵤₜ mittels mindestens eines von dem Bremsbetätigungselement und/oder dem mindestens einen Bremsbetätigungselementsensor ausgegebenen Signals von der Elektronikeinrichtung empfangbar ist.

Unter dem Bremsbetätigungselement kann beispielsweise ein Bremspedal des Fahrzeugs verstanden werden, während der mindestens eine Bremsbetätigungselementsensor z.B. ein Pedalwegsensor oder Pedalwinkelsensor, ein Stangenwegsensor, ein Differenzwegsensor, ein Fahrerbremskraftsensor und/oder ein Hauptbremszylinderdrucksensor/Vordrucksensor sein kann. Die Elektronikeinrichtung kann insbesondere dazu ausgelegt sein, einen zeitlichen Verlauf eines Pedalwegs, einen zeitlichen Verlauf eines Eingangsstangenwegs, einen zeitlichen Verlauf eines Differenzwegs, einen zeitlichen Verlauf einer auf das Bremsbetätigungselement ausgeübten Fahrerbremskraft und/oder einen zeitlichen Verlauf eines Hauptbremszylinderdrucks in einem dem Bremsbetätigungselement nachgeordneten Hauptbremszylinder (bzw. einen zeitlichen Verlauf eines Vordrucks) als den zeitlichen Verlauf der Eingangsgröße xᵢₙₚᵤₜ auszuwerten. Die hier genannten Beispiele für das Bremsbetätigungselement, den mindestens einen Bremsbetätigungselementsensor und die Eingangsgröße xᵢₙₚᵤₜ sind jedoch nur beispielhaft zu interpretieren. Unter der Eingangsgröße xᵢₙₚᵤₜ kann insbesondere jede einen Fahrerbremswunsch wiedergebende Größe verstanden werden.

Die Steuervorrichtung hat auch eine Speichereinrichtung, auf welcher eine Kennlinie k₀, k₁ oder k₂ abgespeichert ist. Die Kennlinie k₀, k₁ oder k₂ gibt eine Relation zwischen der Eingangs-Größe xᵢₙₚᵤₜ und einer Sollgröße a_{vehicle} bezüglich einer mittels der Fahrzeugverzögerungsvorrichtung auf das Fahrzeug auszuübenden Sollfahrzeugverzögerung a_{vehicle} vor. Die Elektronikeinrichtung ist dazu ausgelegt, unter Berücksichtigung der Kennlinie k₀, k₁ oder k₂ und der aktuellen Eingangs-Größe xᵢₙₚᵤₜ die Fahrzeugverzögerungsvorrichtung anzusteuern. Vorteilhafterweise ist die Fahrzeugverzögerungsvorrichtung mittels der Elektronikeinrichtung derart ansteuerbar, dass mittels der Fahrzeugverzögerungsvorrichtung eine aktuelle Soll-Verzögerung a_{vehicle} entsprechend der Kennlinie k₀, k₁ oder k₂ und der aktuellen Eingangs-Größe xᵢₙₚᵤₜ auf das Fahrzeug ausübbar ist. Die mittels der Elektronikeinrichtung ansteuerbare Fahrzeugverzögerungsvorrichtung kann beispielsweise einen (dem Hauptbremszylinder vorgelagerten) Bremskraftverstärker, mindestens eine Kolben-Zylinder-Vorrichtung eines hydraulischen Bremssystems und/oder mindestens eine Pumpe des hydraulischen Bremssystems umfassen. Der (dem Hauptbremszylinder vorgelagerte) Bremskraftverstärker kann insbesondere ein elektromechanischer Bremskraftverstärker (iBooster) sein. Die hier genannten Beispiele für die Fahrzeugverzögerungsvorrichtung sind jedoch nicht einschränkend zu interpretieren.

In dem Koordinatensystem der Fig. 1a ist mittels der Abszisse die Eingangs-Größe xᵢₙₚᵤₜ wiedergegeben, während eine Ordinate die Sollfahrzeugverzögerung a_{vehicle} als die Sollgröße a_{vehicle} anzeigt. In das Koordinatensystem der Fig. 1a sind Auswahlkennlinien k₀, k₁ und k₂ eingezeichnet, von welchen jede Auswahlkennlinien k₀, k₁ und k₂ jeweils eine (mittels der im Weiteren beschriebenen Vorgehensweise auswählbare) Relation zwischen der Eingangsgröße xᵢₙₚᵤₜ und der Sollfahrzeugverzögerung a_{vehicle} vorgibt. Als Alternative oder als Ergänzung dazu kann auf der Speichereinrichtung jedoch auch mindestens eine (weitere) Kennlinie abgespeichert sein, welche eine Relation zwischen der Eingangsgröße xᵢₙₚᵤₜ und einer an den (dem Hauptbremszylinder vorgelagerten elektromechanischen) Bremskraftverstärker auszugebenden Sollstromstärke, eine Relation zwischen der Eingangsgröße xᵢₙₚᵤₜ und einer Solldrehzahl eines Motors des (elektromechanischen) Bremskraftverstärkers, eine Relation zwischen der Eingangsgröße xᵢₙₚᵤₜ und einer Sollverstärkerkraft des Bremskraftverstärkers, eine Relation zwischen der Eingangsgröße xᵢₙₚᵤₜ und einem Sollbremsdruck in mindestens einen Radbremszylinder des hydraulischen Bremssystems und/oder eine Relation zwischen der Eingangsgröße xᵢₙₚᵤₜ und einem Sollbremsmoment des mindestens einen Radbremszylinders vorgibt.

Die Elektronikeinrichtung ist zusätzlich dazu ausgelegt, mindestens eine durch den Fahrer ausgelöste Modulation und/oder Schwankung der Eingangsgröße xᵢₙₚᵤₜ zu erkennen. Unter der mindestens einen (mittels der Elektronikeinrichtung erkennbaren) Modulation und/oder Schwankung kann eine plötzliche Änderung der Eingangsgröße xᵢₙₚᵤₜ verstanden werden, welche auf eine von dem Fahrer gewünschte Korrektur seiner Betätigung des Bremsbetätigungselements zurückzuführen ist. Die durch den Fahrer ausgelöste Modulation und/oder Schwankung der Eingangsgröße xᵢₙₚᵤₜ zeigt sich beispielsweise als "Zacken", lokales Minium, lokales Maximum, Sprungbewegung und/oder Zitterbewegung an dem zeitlichen Verlauf der Eingangsgröße xᵢₙₚᵤₜ. Dabei kann die Elektronikeinrichtung wahlweise dazu ausgelegt ist, den zeitlichen Verlauf des Pedalwegs, den zeitlichen Verlauf des Eingangsstangenwegs, den zeitlichen Verlauf des Differenzwegs, den zeitlichen Verlauf der auf das Bremsbetätigungselement ausgeübten Fahrerbremskraft und/oder den zeitlichen Verlauf des Hauptbremszylinderdrucks (des Vordrucks) auf ein eventuelles Auftreten mindestens einer durch den Fahrer ausgelösten Modulation und/oder Schwankung der Eingangsgröße xᵢₙₚᵤₜ zu untersuchen.

In dem Koordinatensystem der Fig. 1b ist eine Abszisse eine Zeitachse t, während mittels einer Ordinate die Eingangsgröße xᵢₙₚᵤₜ(t), eine Fahrzeuggeschwindigkeit v_{vehicle}(t) des Fahrzeugs und die (unter Berücksichtigung der als Kennlinie festgelegten Auswahlkennlinie k₀ und der Eingangsgröße xᵢₙₚᵤₜ) festgelegte Sollfahrzeugverzögerung a_{vehicle}(xᵢₙₚᵤₜ (t), k₀) wiedergegeben sind. Erkennbar ist anhand des in dem Koordinatensystem der Fig. 1b wiedergegebenen zeitlichen Verlaufs der Eingangsgröße xᵢₙₚᵤₜ, dass der Fahrer während dieser Bremsung vergleichsweise häufig und relativ starke Modulationen und/oder Schwankungen der Eingangsgröße xᵢₙₚᵤₜ auslöst. (Mittels eines in der Elektronikeinrichtung integrierten Algorithmus ist eine verlässliche Erkennung von Modulationen und/oder Schwankungen der Eingangsgröße xᵢₙₚᵤₜ möglich.) Die beim Umsetzen der aktuellen Eingangsgröße xᵢₙₚᵤₜ in die aktuelle Sollfahrzeugverzögerung a_{vehicle} verwendete Kennlinie k₀ entspricht somit nicht einer von dem Fahrer für ihn persönlich als passend empfundenen Bremscharakteristik der Fahrzeugverzögerungsvorrichtung.

Die Elektronikeinrichtung ist deshalb auch dazu ausgelegt, unter Berücksichtigung der mindestens einen durch den Fahrer ausgelösten Modulation und/oder Schwankung der Eingangsgröße xᵢₙₚᵤₜ zumindest einen Teilabschnitt der (zuvor mit der Auswahlkennlinie k₀ identischen) Kennlinie neu festzulegen und die entsprechend geänderte Kennlinie (als geltende/zu verwendende Kennlinie) auf der Speichereinrichtung abzuspeichern. Die Steuervorrichtung bietet somit eine selbstlernende Anpassung der Kennlinie k₀, k₁ oder k₂ beim Ansteuern der Fahrzeugverzögerungsvorrichtung anhand der durch den Fahrer ausgelösten Modulationen und/oder Schwankungen der Eingangsgröße xᵢₙₚᵤₜ an persönliche Präferenzen des jeweiligen Fahrers. Die selbstlernende Anpassung der Kennlinie k₀, k₁ oder k₂ beim Ansteuern der Fahrzeugverzögerungsvorrichtung vermittelt dem Fahrer ein gesteigertes Gefühl von Sicherheit, Zuverlässigkeit und Vertrauen zu seinem Fahrzeug.

Insbesondere kann eine Neufestlegung der gesamten (zuvor mit der Auswahl-Kennlinie k₀ identischen) Kennlinie unter Berücksichtigung der mindestens einen durch den Fahrer ausgelösten (und erkannten) Modulation und/oder Schwankung der Eingangsgröße xᵢₙₚᵤₜ erfolgen. Dies kann (wie mittels des Pfeils 10 in dem Koordinatensystem der Fig. 1a dargestellt ist) beispielsweise durch Auswahl einer auf der Speichereinrichtung hinterlegten Auswahl-Kennlinie k1 oder k2, Neufestlegung der ausgewählten Auswahl-Kennlinie k1 oder k2 als Kennlinie k1 oder k2 und Abspeichern der neufestgelegten Kennlinie k1 oder k2 auf der Speichereinrichtung erfolgen. Wie mittels der Pfeile 12 in dem Koordinatensystem der Fig. 1a ebenfalls skizziert ist, kann jedoch auch mindestens ein Parameter der (geltenden) Kennlinie k₀, k₁ oder k₂ unter Berücksichtigung der mindestens einen durch den Fahrer ausgelösten (und erkannten) Modulation und/oder Schwankung der Eingangsgröße xᵢₙₚᵤₜ variiert werden. Beispielswiese können ein "Null-Abschnitt" der (geltenden) Kennlinie k₀, k₁ oder k₂ für Eingangs-Größen xᵢₙₚᵤₜ unter einem Eingangsgrößenschwellwert xᵢₙₚᵤₜ0, eine "Stufenhöhe" der (geltenden) Kennlinie k₀, k₁ oder k₂ bei einem Überwinden des Eingangsgrößenschwellwerts xᵢₙₚᵤₜ0 und/oder mindestens eine Hysteresebreite der (geltenden) Kennlinie k₀, k₁ oder k₂ als der mindestens ein Parameter unter Berücksichtigung der mindestens einen durch den Fahrer ausgelösten (und erkannten) Modulation und/oder Schwankung der Eingangsgröße xᵢₙₚᵤₜ variiert werden. Als Alternative oder als Ergänzung zu einer Variierung des Eingangsgrößenschwellwerts xᵢₙₚᵤₜ0, der "Stufenhöhe" und/oder der mindestens einen Hysteresebreite können jedoch auch mindestens eine Steigung der (geltenden) Kennlinie k₀, k₁ oder k₂, mindestens ein Minimalwert der (geltenden) Kennlinie k₀, k₁ oder k₂ und/oder mindestens ein Maximalwert der (geltenden) Kennlinie k₀, k₁ oder k₂ variiert werden. Mittels der Neufestlegung der Kennlinie k₀, k₁ oder k₂ kann insbesondere ein "Einsprungverhalten" und/oder ein "Verstärkungsverhalten" der Fahrzeugverzögerungsvorrichtung fahrerfreundlicher gestaltet werden. Dabei ist eine schrittweise und stufenlose Anpassung des "Einsprungverhaltens" und/oder des "Verstärkungsverhaltens" der Fahrzeugverzögerungsvorrichtung an die Präferenzen des Fahrers möglich.

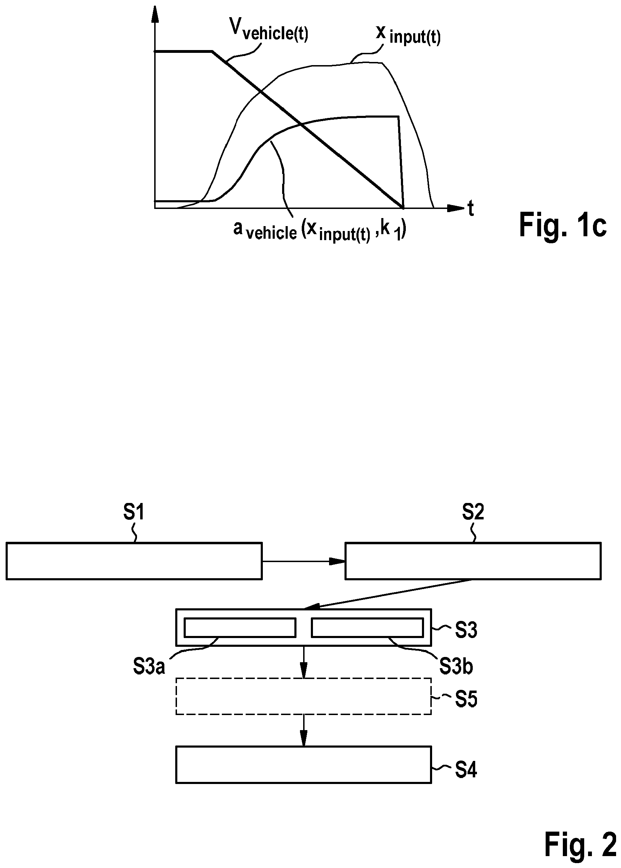

Alle vorausgehend beschriebenen Vorgehensweisen zum Neufestlegen der (geltenden) Kennlinie k₀, k₁ oder k₂ können zu einer "fahrerspezifischen Verbesserung" der Kennlinie k₀, k₁ oder k₂ genutzt werden. Die "fahrerspezifische Verbesserung" der Kennlinie k₀, k₁ oder k₂ ist anhand eines Abnehmens/Entfallens von durch den Fahrer ausgelösten Modulationen und/oder Schwankungen der Eingangsgröße xᵢₙₚᵤₜ erkennbar. In dem Koordinatensystem der Fig. 1c ist eine Abszisse eine Zeitachse t, während mittels einer Ordinate die Eingangsgröße xᵢₙₚᵤₜ(t), die Fahrzeuggeschwindigkeit v_{vehicle}(t) des Fahrzeugs und die (unter Berücksichtigung der als Kennlinie festgelegten Auswahlkennlinie k₁ und der Eingangsgröße xᵢₙₚᵤₜ) festgelegte Sollfahrzeugverzögerung a_{vehicle}(xᵢₙₚᵤₜ (t), k₁) wiedergegeben sind. Erkennbar ist, dass bei der mittels der Fig. 1c wiedergegebenen Bremsung der Fahrer keine Modulationen und/oder Schwankungen der Eingangsgröße xᵢₙₚᵤₜ auslöst. Die Bremscharakteristik der Fahrzeugverzögerungsvorrichtung entspricht somit beim Ausführen der mittels der Fig. 1c wiedergegebenen Bremsung einer persönlichen Präferenz des Fahrers.

Die Elektronikeinrichtung kann beispielsweise dazu ausgelegt sein, eine Häufigkeit und/oder eine Modulationsstärke von durch den Fahrer ausgelösten Modulationen und/oder Schwankungen der Eingangsgröße xᵢₙₚᵤₜ während mindestens einer Bremsung zu bestimmen. Sofern die bestimmte Häufigkeit zumindest abschnittsweise entlang der Kennlinie k₀, k₁ oder k₂ über einem vorgegebenen Häufigkeitsschwellwert liegt und/oder die bestimmte Modulationsstärke zumindest abschnittsweise entlang der Kennlinie k₀, k₁ oder k₂ über einem vorgegebenen Stärkeschwellwert liegt, kann die Elektronikeinrichtung dazu ausgelegt sein, zumindest den mindestens einen betreffenden Teilabschnitt der Kennlinie k₀, k₁ oder k₂ neu festzulegen und die entsprechend geänderte Kennlinie (als geltende/zu verwendende Kennlinie) auf der Speichereinrichtung abzuspeichern.

Alternativ kann die Elektronikeinrichtung auch dazu ausgelegt sein, zuerst für mindestens eine erste Kennlinie k₀ mindestens eine (durch Einhalten der ersten Kennlinie k₀ bewirkte) erste Häufigkeit und/oder mindestens eine (durch Einhalten der ersten Kennlinie k₀ bewirkte) erste Modulationsstärke, wie z.B. die Häufigkeit und/oder die Modulationsstärke der in Fig. 1b dargestellten Modulationen und/oder Schwankungen, während mindestens einer ersten Bremsung zu bestimmen und für einen späteren Vergleich abzuspeichern. Nach einem Neufestlegen einer zweiten Kennlinie k₁, welche im Vergleich zu der mindestens einen ersten Kennlinie k₀ jeweils zumindest einen neufestgelegten Teilabschnitt aufweist, können für die zweite Kennlinie k₁ eine (durch Einhalten der zweiten Kennlinie k₁ bewirkte) zweite Häufigkeit und/oder eine (durch Einhalten der zweiten Kennlinie k₁ bewirkte) zweite Modulationsstärke, wie z.B. die Häufigkeit und/oder die Modulationsstärke der in Fig. 1c dargestellten Modulationen und/oder Schwankungen, während mindestens einer zweiten Bremsung bestimmt werden. Die Elektronikeinrichtung kann dann dazu ausgelegt sein, die mindestens eine erste Häufigkeit und/oder die mindestens eine erste Modulationsstärke mit der zweiten Häufigkeit und/oder der zweiten Modulationsstärke zu vergleichen, und, sofern zumindest abschnittsweise entlang der zweiten Kennlinie k₁ eine Zunahme von Modulationen und/oder Schwankungen der Eingangsgröße xᵢₙₚᵤₜ anhand der miteinander verglichenen Häufigkeiten und/oder zumindest abschnittsweise entlang der zweiten Kennlinie k₁ eine Verstärkung von Modulationen und/oder Schwankungen der Eingangs-Größe xᵢₙₚᵤₜ anhand der miteinander verglichenen Modulations-Stärken feststellbar ist, zumindest den mindestens einen betreffenden Teilabschnitt der zweiten Kennlinie k₁ neu festzulegen.

Zur Neufestlegung der Kennlinie k₀, k₁ oder k₂ (bzw. zumindest eines Teilabschnitts der Kennlinie k₀, k₁ oder k₂) kann (von einem Hersteller der Steuervorrichtung) ein Algorithmus auf der Elektronikeinrichtung hinterlegt sein, welcher eine feste/vorgegebene Reihenfolge bei der fahrerspezifischen Anpassung der Kennlinie k₀, k₁ oder k₂ vorgibt. Insbesondere kann gemäß der festen/vorgegebenen Reihenfolge eine Anzahl von Kennlinien k₀, k₁ oder k₂ und/oder Kennlinienparametern nacheinander durch getestet werden, bis die Präferenzen des Fahrers erkannt sind. Als Alternative zu der vorausgehend beschriebenen Vorgehensweise kann die Elektronikeinrichtung auch einen Algorithmus aufweisen, welcher selbst "entscheidet", in welche Richtung eine Neufestlegung der Kennlinie k₀, k₁ oder k₂ (bzw. zumindest eines Teilabschnitts der Kennlinie k₀, k₁ oder k₂) auf eine Reaktion des Fahrers getestet wird.

Die vorausgehend beschriebenen Vorteile sind auch bei einer Fahrzeugverzögerungsvorrichtung, welche die Steuervorrichtung (als Bauteil) aufweist, gewährleistet. Ebenso können die Vorteile bewirkt werden, wenn die Steuervorrichtung mit einer getrennt davon ausgebildeten Fahrzeugverzögerungsvorrichtung zusammenwirkt. In beiden Fällen kann die Fahrzeugverzögerungsvorrichtung z.B. ein Bremskraftverstärker (insbesondere ein elektromechanischer Bremskraftverstärker), eine Kolben-Zylinder-Vorrichtung, ein Pumpensystem mit mindestens einer Pumpe oder ein Bremssystem sein.

Fig. 2 zeigt ein Flussdiagramm zum Erläutern einer ersten Ausführungsform des Verfahrens zum Betreiben einer Fahrzeugverzögerungsvorrichtung eines Fahrzeugs.

Es wird ausdrücklich darauf hingewiesen, dass eine Ausführbarkeit des im Weiteren beschriebenen Verfahrens weder auf einen bestimmten Typ der Fahrzeugverzögerungsvorrichtung noch auf einen speziellen Fahrzeugtyp/Kraftfahrzeugtyp des mit der jeweiligen Fahrzeugverzögerungsvorrichtung ausgestatteten Fahrzeugs/Kraftfahrzeugs beschränkt ist.

In dem Verfahrensschritt S1 wird ein zeitlicher Verlauf einer von dem Fahrer des Fahrzeugs mittels seiner Betätigung des Bremsbetätigungselements vorgegebenen Eingangsgröße ermittelt. Beispiele für das Bremsbetätigungselement und die Eingangsgröße sind oben schon aufgezählt.

Gleichzeitig mit dem Verfahrensschritt S1 wird ein Verfahrensschritt S2 ausgeführt, in welchem die Fahrzeugverzögerungsvorrichtung unter Berücksichtigung einer Kennlinie und der aktuellen Eingangs-Größe angesteuert wird. Die Kennlinie gibt eine Relation zwischen der Eingangs-Größe und einer Soll-Größe bezüglich einer mittels der Fahrzeugverzögerungsvorrichtung auf das Fahrzeug auszuübenden Soll-Fahrzeugverzögerung vor. Das Ansteuern der Fahrzeugverzögerungsvorrichtung erfolgt in dem Verfahrensschritt S2 vorzugsweise so, dass mittels der Fahrzeugverzögerungsvorrichtung eine aktuelle Soll-Fahrzeugverzögerung entsprechend der Kennlinie und der aktuellen Eingangs-Größe auf das Fahrzeug ausgeübt wird. Mögliche Ausführungsformen für die Fahrzeugverzögerungsvorrichtung sind oben schon genannt.

In einem weiteren Verfahrensschritt S3 wird der zeitliche Verlauf der Eingangs-Größe auf ein eventuelles Auftreten von mindestens einer durch den Fahrer ausgelösten Modulation und/oder Schwankung der Eingangs-Größe untersucht. Außerdem erfolgt in einem Verfahrensschritt S4 ein Neufestlegen zumindest eines Teilabschnitts der Kennlinie in Abhängigkeit von dem eventuellen Auftreten der mindestens einen durch den Fahrer ausgelösten Modulation und/oder Schwankung der Eingangsgröße. Damit bewirkt auch ein Ausführen der Verfahrensschritte S1 bis S4 die oben beschriebenen Vorteile.

In dem Verfahrensschritt S3 werden beispielsweise eine Häufigkeit und/oder eine Modulations-Stärke von durch den Fahrer ausgelösten Modulationen und/oder Schwankungen während mindestens einer Bremsung bestimmt. In einem nach dem Verfahrensschritt S3 ausgeführten (optionalen) Verfahrensschritt S5 kann dann entschieden werden, ob ein Ausführen des Verfahrensschritts S4 vorteilhaft ist.

Beispielsweise wird, sofern in dem Verfahrensschritt S5 festgestellt wird, dass die bestimmte Häufigkeit zumindest abschnittsweise entlang der Kennlinie über einem vorgegebenen Häufigkeitsschwellwert liegt und/oder die bestimmte Modulationsstärke zumindest abschnittsweise entlang der Kennlinie über einem vorgegebenen Stärkeschwellwert liegt, zumindest der mindestens eine betreffende Teilabschnitt der Kennlinie (als Verfahrensschritt S4) neu festgelegt. Ebenso können als Teilschritt S3a des Verfahrensschritts S3 für mindestens eine erste Kennlinie mindestens eine erste Häufigkeit und/oder mindestens eine erste Modulationsstärke während mindestens einer ersten Bremsung bestimmt werden. Als weiterer Teilschritt S3b des Verfahrensschritts S3 kann für eine zweite Kennlinie, welche im Vergleich zu der mindestens einen ersten Kennlinie jeweils zumindest einen neufestgelegten Teilabschnitt aufweist, eine zweite Häufigkeit und/oder eine zweite Modulationsstärke während mindestens einer zweiten Bremsung bestimmt werden. In dem Verfahrensschritt S5 können dann die mindestens eine erste Häufigkeit und/oder die mindestens eine erste Modulationsstärke mit der zweiten Häufigkeit und/oder der zweiten Modulationsstärke verglichen werden. Sofern in dem Verfahrensschritt S5 festgestellt wird, dass zumindest abschnittsweise entlang der zweiten Kennlinie eine Zunahme von Modulationen und/oder Schwankungen der Eingangsgröße anhand der miteinander verglichenen Häufigkeiten und/oder zumindest abschnittsweise entlang der zweiten Kennlinie eine Verstärkung von Modulationen und/oder Schwankungen der Eingangsgröße anhand der miteinander verglichenen Modulationsstärken auftreten, kann zumindest der mindestens eine betreffende Teilabschnitt der Kennlinie (als Verfahrensschritt S4) neu festgelegt werden.

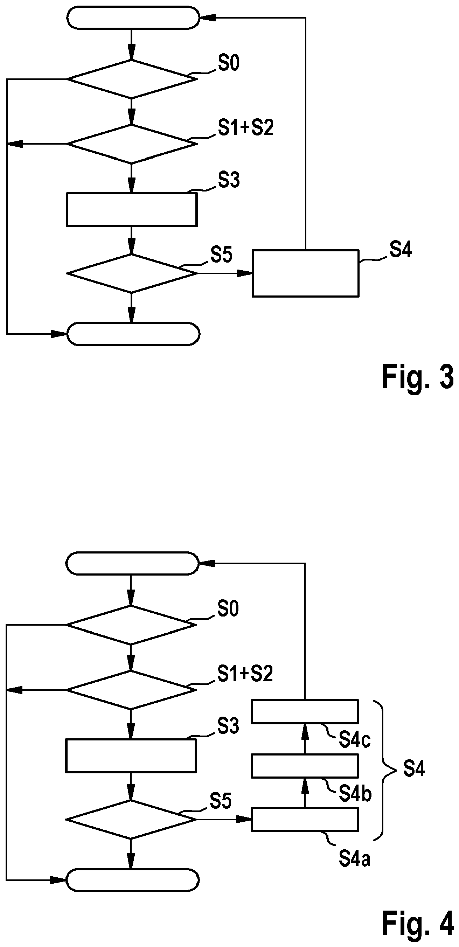

Fig. 3 zeigt ein Flussdiagramm zum Erläutern einer zweiten Ausführungsform des Verfahrens zum Betreiben einer Fahrzeugverzögerungsvorrichtung eines Fahrzeugs.

In einem (optionalen) Verfahrensschritt S0 wird untersucht, ob ein Fahrer des Fahrzeugs mittels einer Betätigung eines Bremsbetätigungselements des Fahrzeugs ein Verlangsamen/Abbremsen seines (fahrenden) Fahrzeugs anfordert. Sofern dies zutrifft, wird das Verfahren zumindest mit den Verfahrensschritten S1 und S2 fortgesetzt.

Ist an dem zeitlichen Verlauf der Eingangs-Größe mindestens eine durch den Fahrer ausgelöste Modulation und/oder Schwankung der Eingangsgröße erkennbar, so wird der Verfahrensschritt S3 ausgeführt. Danach wird das Verfahren mit dem Verfahrensschritt S5 fortgesetzt. Wird in dem Verfahrensschritt S5 erkannt, dass ein Ausführen des Verfahrensschritts S4 vorteilhaft ist, so wird das Verfahren mit dem Verfahrensschritt S4 fortgesetzt. (Ausführungsbeispiele für die Verfahrensschritte S3 und S5 zum Untersuchen einer Vorteilhaftigkeit des Verfahrensschritts S4 sind oben schon beschrieben.)

In der Ausführungsform der Fig. 3 erfolgt in dem Verfahrensschritt S4 eine Parameteranpassung auf Basis einer voreingestellten Charakteristik. Beispielsweise werden gemäß einer festen/vorgegebenen Reihenfolge eine Anzahl von Kennlinien und/oder Kennlinien-Parametern nacheinander durch getestet, bis die Präferenzen des Fahrers erkannt sind.

Fig. 4 zeigt ein Flussdiagramm zum Erläutern einer dritten Ausführungsform des Verfahrens zum Betreiben einer Fahrzeugverzögerungsvorrichtung eines Fahrzeugs.

Das Verfahren der Fig. 4 unterscheidet sich von der zuvor beschriebenen Ausführungsform darin, dass der Verfahrensschritt S4 mehrere Teilschritte umfasst: In einem Teilschritt S4a werden die durch den Fahrer ausgelösten Modulationen und/oder Schwankungen der Eingangsgröße analysiert. Anschließend wird in einem Teilschritt S4b bestimmt, welcher/welche Parameter der Kennlinie zur Anpassung des "Einsprungverhaltens" der Kennlinie neu festgelegt wird/werden. In einem weiteren Teilschritt S4c wird auch eine Anpassung des "Verstärkungsverhaltens" der Kennlinie durch Neufestlegung mindestens eines Parameters ausgeführt.

## Patentansprüche

1. Steuervorrichtung für eine Fahrzeugverzögerungsvorrichtung eines Fahrzeugs mit:
einer Elektronikeinrichtung, welche derart an ein Bremsbetätigungselement des Fahrzeugs und/oder an mindestens einen Bremsbetätigungselementsensor des Fahrzeugs anbindbar ist, dass ein zeitlicher Verlauf einer von einem Fahrer des Fahrzeugs mittels einer Betätigung des Bremsbetätigungselements vorgegebenen Eingangs-Größe (xᵢₙₚᵤₜ) mittels der Elektronikeinrichtung auswertbar ist; und
einer Speichereinrichtung, auf welcher eine Kennlinie (k₀, k₁, k₂) abgespeichert ist, welche eine Relation zwischen der Eingangsgröße (xᵢₙₚᵤₜ) und einer Sollgröße (a_{vehicle}) bezüglich einer mittels der Fahrzeugverzögerungsvorrichtung auf das Fahrzeug auszuübenden Sollfahrzeugverzögerung (a_{vehicle}) vorgibt;
wobei die Elektronikeinrichtung dazu ausgelegt ist, unter Berücksichtigung der Kennlinie (k₀, k₁, k₂) und der aktuellen Eingangsgröße (xᵢₙₚᵤₜ) die Fahrzeugverzögerungsvorrichtung anzusteuern, so dass mittels der Fahrzeugverzögerungsvorrichtung eine aktuelle Sollfahrzeugverzögerung (a_{vehicle}) entsprechend der Kennlinie (k₀, k₁, k₂) und der aktuellen Eingangsgröße (xᵢₙₚᵤₜ) auf das Fahrzeug ausübbar ist;
**dadurch gekennzeichnet, dass**:
die Elektronikeinrichtung zusätzlich dazu ausgelegt ist, mindestens eine durch den Fahrer ausgelöste Modulation und/oder Schwankung der Eingangsgröße (xᵢₙₚᵤₜ) zu erkennen, und unter Berücksichtigung der mindestens einen durch den Fahrer ausgelösten Modulation und/oder Schwankung der Eingangsgröße (xᵢₙₚᵤₜ) zumindest einen Teilabschnitt der Kennlinie (k₀, k₁, k₂) neu festzulegen und die entsprechend geänderte Kennlinie (k₀, k₁, k₂) auf der Speichereinrichtung abzuspeichern.

2. Steuervorrichtung nach Anspruch 1, wobei die Elektronikeinrichtung zusätzlich dazu ausgelegt ist, eine Häufigkeit und/oder eine Modulationsstärke von durch den Fahrer ausgelösten Modulationen und/oder Schwankungen während mindestens einer Bremsung zu bestimmen.

3. Steuervorrichtung nach Anspruch 2, wobei, sofern die bestimmte Häufigkeit zumindest abschnittsweise entlang der Kennlinie (k₀, k₁, k₂) über einem vorgegebenen Häufigkeitsschwellwert liegt und/oder die bestimmte Modulationsstärke zumindest abschnittsweise entlang der Kennlinie (k₀, k₁, k₂) über einem vorgegebenen Stärkeschwellwert liegt, die Elektronikeinrichtung dazu ausgelegt ist, zumindest den mindestens einen betreffenden Teilabschnitt der Kennlinie (k₀, k₁, k₂) neu festzulegen und die entsprechend geänderte Kennlinie (k₀, k₁, k₂) auf der Speichereinrichtung abzuspeichern.

4. Steuervorrichtung nach Anspruch 2, wobei die Elektronikeinrichtung zusätzlich dazu ausgelegt ist, für mindestens eine erste Kennlinie (k₀) mindestens eine erste Häufigkeit und/oder mindestens eine erste Modulationsstärke während mindestens einer ersten Bremsung zu bestimmen, für eine zweite Kennlinie (k₁), welche im Vergleich zu der mindestens einen ersten Kennlinie (k₀) jeweils zumindest einen neufestgelegten Teilabschnitt aufweist, eine zweite Häufigkeit und/oder eine zweite Modulationsstärke während mindestens einer zweiten Bremsung zu bestimmen, die mindestens eine erste Häufigkeit und/oder die mindestens eine erste Modulationsstärke mit der zweiten Häufigkeit und/oder der zweiten Modulations-Stärke zu vergleichen, und, sofern zumindest abschnittsweise entlang der zweiten Kennlinie (k₁) eine Zunahme von Modulationen und/oder Schwankungen der Eingangsgröße (xᵢₙₚᵤₜ) anhand der miteinander verglichenen Häufigkeiten und/oder zumindest abschnittsweise entlang der zweiten Kennlinie (ki) eine Verstärkung von Modulationen und/oder Schwankungen der Eingangsgröße (xᵢₙₚᵤₜ) anhand der miteinander verglichenen Modulationsstärken feststellbar ist, zumindest den mindestens einen betreffenden Teilabschnitt der zweiten Kennlinie (k₁) neu festzulegen.

5. Steuervorrichtung nach einem der vorhergehenden Ansprüche, wobei die Elektronikeinrichtung dazu ausgelegt ist, einen zeitlichen Verlauf eines Pedalwegs, einen zeitlichen Verlauf eines Eingangsstangenwegs, einen zeitlichen Verlauf eines Differenzwegs, einen zeitlichen Verlauf einer auf das Bremsbetätigungselement ausgeübten Fahrerbremskraft und/oder einen zeitlichen Verlauf eines Hauptbremszylinderdrucks in einem dem Bremsbetätigungselement nachgeordneten Hauptbremszylinder als den zeitlichen Verlauf der Eingangsgröße (xᵢₙₚᵤₜ) auf ein eventuelles Auftreten von mindestens einer durch den Fahrer ausgelösten Modulation und/oder Schwankung der Eingangsgröße (xᵢₙₚᵤₜ) zu untersuchen.

6. Steuervorrichtung nach einem der vorhergehenden Ansprüche, wobei die Kennlinie (k₀, k₁, k₂) eine Relation zwischen der Eingangsgröße (xᵢₙₚᵤₜ) und einer an einen dem Hauptbremszylinder vorgelagerten Bremskraftverstärker auszugebenden Sollstromstärke, eine Relation zwischen der Eingangsgröße (xᵢₙₚᵤₜ) und einer Solldrehzahl eines Motors des Bremskraftverstärkers, eine Relation zwischen der Eingangsgröße (xᵢₙₚᵤₜ) und einer Sollverstärkerkraft des Bremskraftverstärkers, eine Relation zwischen der Eingangsgröße (xᵢₙₚᵤₜ) und einem Sollbremsdruck in mindestens einen Radbremszylinder eines hydraulischen Bremssystems, eine Relation zwischen der Eingangsgröße (xᵢₙₚᵤₜ) und einem Sollbremsmoment des mindestens einen Radbremszylinders und/oder eine Relation zwischen der Eingangs-Größe (xᵢₙₚᵤₜ) und der Sollfahrzeugverzögerung (a_{vehicle}) vorgibt.

7. Steuervorrichtung nach einem der vorhergehenden Ansprüche, wobei die Elektronikeinrichtung dazu ausgelegt ist, unter Berücksichtigung der Kennlinie (k₀, k₁, k₂) und der aktuellen Eingangsgröße (xᵢₙₚᵤₜ) den dem Hauptbremszylinder vorgelagerten Bremskraftverstärker, mindestens eine Kolben-Zylinder-Vorrichtung des hydraulischen Bremssystems und/oder mindestens eine Pumpe des hydraulischen Bremssystems als die Fahrzeugverzögerungsvorrichtung anzusteuern.

8. Fahrzeugverzögerungsvorrichtung für ein Fahrzeug mit einer Steuervorrichtung nach einem der vorhergehenden Ansprüche.

9. Fahrzeugverzögerungsvorrichtung nach Anspruch 8, wobei die Fahrzeugverzögerungsvorrichtung der Bremskraftverstärker, die Kolben-Zylinder-Vorrichtung, ein Pumpensystem mit der mindestens einen Pumpe oder das Bremssystem ist.

10. Verfahren zum Betreiben einer Fahrzeugverzögerungsvorrichtung eines Fahrzeugs mit den Schritten:
Ermitteln eines zeitlichen Verlaufs einer von einem Fahrer des Fahrzeugs mittels einer Betätigung eines Bremsbetätigungselements des Fahrzeugs vorgegebenen Eingangsgröße (xᵢₙₚᵤₜ) (S1); und
Ansteuern der Fahrzeugverzögerungsvorrichtung unter Berücksichtigung der aktuellen Eingangsgröße (xᵢₙₚᵤₜ) und einer Kennlinie (k₀, k₁, k₂), welche eine Relation zwischen der Eingangsgröße (xᵢₙₚᵤₜ) und einer Sollgröße (a_{vehicle}) bezüglich einer mittels der Fahrzeugverzögerungsvorrichtung auf das Fahrzeug auszuübenden Sollfahrzeugverzögerung (a_{vehicle}) vorgibt, so dass mittels der Fahrzeugverzögerungsvorrichtung eine aktuelle Sollfahrzeugverzögerung (a_{vehicle}) entsprechend der Kennlinie (k₀, k₁, k₂) und der aktuellen Eingangsgröße (xᵢₙₚᵤₜ) auf das Fahrzeug ausgeübt wird (S2);
**gekennzeichnet durch** die Schritte:
Untersuchen des zeitlichen Verlaufs der Eingangsgröße (xᵢₙₚᵤₜ) auf ein eventuelles Auftreten von mindestens einer durch den Fahrer ausgelösten Modulation und/oder Schwankung der Eingangs-Größe (xᵢₙₚᵤₜ) (S3); und
Neufestlegen zumindest eines Teilabschnitts der Kennlinie (k₀, k₁, k₂) in Abhängigkeit von dem eventuellen Auftreten der mindestens einen durch den Fahrer ausgelösten Modulation und/oder Schwankung der Eingangsgröße (xᵢₙₚᵤₜ) (S4).

11. Verfahren nach Anspruch 10, wobei eine Häufigkeit und/oder eine Modulationsstärke von durch den Fahrer ausgelösten Modulationen und/oder Schwankungen während mindestens einer Bremsung bestimmt werden.

12. Verfahren nach Anspruch 11, wobei, sofern die bestimmte Häufigkeit zumindest abschnittsweise entlang der Kennlinie (k₀, k₁, k₂) über einem vorgegebenen Häufigkeitsschwellwert liegt und/oder die bestimmte Modulationsstärke zumindest abschnittsweise entlang der Kennlinie (k₀, k₁, k₂) über einem vorgegebenen Stärkeschwellwert liegt, zumindest der mindestens eine betreffende Teilabschnitt der Kennlinie (k₀, k₁, k₂) neu festgelegt wird.

13. Verfahren nach Anspruch 11, wobei:
- für mindestens eine erste Kennlinie (k₀) mindestens eine erste Häufigkeit und/oder mindestens eine erste Modulationsstärke während mindestens einer ersten Bremsung bestimmt werden (S3a);
- für eine zweite Kennlinie (k₁), welche im Vergleich zu der mindestens einen ersten Kennlinie (k₀) jeweils zumindest einen neufestgelegten Teilabschnitt aufweist, eine zweite Häufigkeit und/oder eine zweite Modulationsstärke während mindestens einer zweiten Bremsung bestimmt werden (S3b);
- die mindestens eine erste Häufigkeit und/oder die mindestens eine erste Modulationsstärke mit der zweiten Häufigkeit und/oder der zweiten Modulationsstärke verglichen werden; und,
- sofern zumindest abschnittsweise entlang der zweiten Kennlinie (k₁) eine Zunahme von Modulationen und/oder Schwankungen der Eingangsgröße (xᵢₙₚᵤₜ) anhand der miteinander verglichenen Häufigkeiten und/oder zumindest abschnittsweise entlang der zweiten Kennlinie (ki) eine Verstärkung von Modulationen und/oder Schwankungen der Eingangsgröße (xᵢₙₚᵤₜ) anhand der miteinander verglichenen Modulationsstärken festgestellt werden, zumindest der mindestens eine betreffende Teilabschnitt der Kennlinie (k₁) neu festgelegt wird.

## Claims

1. Control device for a vehicle deceleration device of a vehicle, having:
an electronics unit which is connectable to a brake actuation element of the vehicle and/or to at least one brake actuation element sensor of the vehicle in such a manner that a temporal profile of an input variable (xᵢₙₚᵤₜ) which is predetermined by a driver of the vehicle by actuating the brake actuation element can be evaluated by means of the electronics unit; and
a storage unit in which a characteristic curve (k₀, k₁, k₂) is stored, said characteristic curve predetermining a relationship between the input variable (xᵢₙₚᵤₜ) and a target variable (a_{vehicle}) with respect to a target vehicle deceleration (a_{vehicle}) to be exerted on the vehicle by the vehicle deceleration device;
wherein the electronics unit is designed to activate the vehicle deceleration device taking into account the characteristic curve (k₀, k₁, k₂) and the current input variable (xᵢₙₚᵤₜ) such that a current target vehicle deceleration (a_{vehicle}) in accordance with the characteristic curve (k₀, k₁, k₂) and the current input variable (xᵢₙₚᵤₜ) can be exerted on the vehicle by the vehicle deceleration device;
**characterized in that**:
the electronics unit is additionally designed to identify at least one modulation and/or fluctuation of the input variable (xᵢₙₚᵤₜ) triggered by the driver, and to redefine at least one portion of the characteristic curve (k₀, k₁, k₂) taking into account the at least one modulation and/or fluctuation of the input variable (xᵢₙₚᵤₜ) triggered by the driver and to store the correspondingly changed characteristic curve (k₀, k₁, k₂) in the storage unit.

2. Control device according to Claim 1, wherein the electronics unit is additionally designed to determine a frequency and/or a modulation strength of modulations and/or fluctuations triggered by the driver during at least one braking operation.

3. Control device according to Claim 2, wherein, if the determined frequency is above a predetermined frequency threshold value at least in portions along the characteristic curve (k₀, k₁, k₂) and/or the determined modulation strength is above a predetermined strength threshold value at least in portions along the characteristic curve (k₀, k₁, k₂), the electronics unit is designed to redefine at least the at least one relevant portion of the characteristic curve (k₀, k₁, k₂) and to store the correspondingly changed characteristic curve (k₀, k₁, k₂) in the storage unit.

4. Control device according to Claim 2, wherein the electronics unit is additionally designed to determine, for at least one first characteristic curve (k₀), at least one first frequency and/or at least one first modulation strength during at least one first braking operation, for a second characteristic curve (k₁), which in each case has at least one redefined portion in comparison to the at least one first characteristic curve (k₀), a second frequency and/or a second modulation strength during at least one second braking operation, to compare the at least one first frequency and/or the at least one first modulation strength with the second frequency and/or the second modulation strength, and, if an increase of modulations and/or fluctuations of the input variable (xᵢₙₚᵤₜ) can be established at least in portions along the second characteristic curve (k₁) with reference to the frequencies compared with one another, and/or an amplification of modulations and/or fluctuations of the input variable (xᵢₙₚᵤₜ) can be established at least in portions along the second characteristic curve (k₁) with reference to the modulation strengths compared with one another, to redefine at least the at least one relevant portion of the second characteristic curve (k₁).

5. Control device according to one of the preceding claims, wherein the electroics unit is designed to investigate a temporal profile of a pedal travel, a temporal profile of an input rod path, a temporal profile of a differential path, a temporal profile of a driver braking force exerted on the brake actuation element and/or a temporal profile of a master brake cylinder pressure in a master brake cylinder, which is arranged downstream of the brake actuation element, as the temporal profile of the input variable (xᵢₙₚᵤₜ) for a possible occurrence of at least one modulation and/or fluctuation of the input variable (xᵢₙₚᵤₜ) triggered by the driver.

6. Control device according to one of the preceding claims, wherein the characteristic curve (k₀, k₁, k₂) predetermines a relationship between the input variable (xᵢₙₚᵤₜ) and a target current strength to be output to a brake booster mounted upstream of the main brake cylinder, a relationship between the input variable (xᵢₙₚᵤₜ) and a target rotational speed of a motor of the brake booster, a relationship between the input variable (xᵢₙₚᵤₜ) and a target booster force of the brake booster, a relationship between the input variable (xᵢₙₚᵤₜ) and a target brake pressure in at least one wheel brake cylinder of a hydraulic brake system, a relationship between the input variable (xᵢₙₚᵤₜ) and a target braking torque of the at least one wheel brake cylinder, and/or a relationship between the input variable (xᵢₙₚᵤₜ) and the target vehicle deceleration (a_{vehicle}) .

7. Control device according to one of the preceding claims, wherein the electronics unit is designed, taking into account the characteristic curve (k₀, k₁, k₂) and the current input variable (xᵢₙₚᵤₜ) , to activate the brake booster mounted upstream of the master brake cylinder, at least one piston-cylinder device of the hydraulic brake system and/or at least one pump of the hydraulic brake system as the vehicle deceleration device.

8. Vehicle deceleration device for a vehicle having a control device according to one of the preceding claims.

9. Vehicle deceleration device according to Claim 8, wherein the vehicle deceleration device is the brake booster, the piston-cylinder device, a pump system with the at least one pump, or the brake system.

10. Method for operating a vehicle deceleration device of a vehicle, having the steps of:
determining a temporal profile of an input variable (x-input) predetermined by a driver of the vehicle by actuating a brake actuation element of the vehicle (S1); and
activating the vehicle deceleration device taking into account the current input variable (xᵢₙₚᵤₜ) and a characteristic curve (k₀, k₁, k₂), which predetermines a relationship between the input variable (xᵢₙₚᵤₜ) and a target variable (a_{vehicle}) with respect to a target vehicle deceleration (a_{vehicle}) to be exerted on the vehicle by the vehicle deceleration device, such that a current target vehicle deceleration (a_{vehicle}) is exerted on the vehicle in accordance with the characteristic curve (k₀, k₁, k₂) and the current input variable (xᵢₙₚᵤₜ) by the vehicle deceleration device (S2);
**characterized by** the following steps:
investigating the temporal profile of the input variable (xᵢₙₚᵤₜ) for a possible occurrence of at least one modulation and/or fluctuation of the input variable (xᵢₙₚᵤₜ) triggered by the driver (S3) ; and
redefining at least one portion of the characteristic curve (k₀, k₁, k₂) depending on the possible occurrence of the at least one modulation and/or fluctuation of the input variable (xᵢₙₚᵤₜ) triggered by the driver (S4).

11. Method according to Claim 10, wherein a frequency and/or a modulation strength of modulations and/or fluctuations triggered by the driver are determined during at least one braking operation.

12. Method according to Claim 11, wherein, if the determined frequency is above a predetermined frequency threshold value at least in portions along the characteristic curve (k₀, k₁, k₂) and/or the determined modulation strength is above a predetermined strength threshold value at least in portions along the characteristic curve (k₀, k₁, k₂), at least the at least one relevant portion of the characteristic curve (k₀, k₁, k₂) is redefined.

13. Method according to Claim 11, wherein:
- for at least one first characteristic curve (k₀), at least one first frequency and/or at least one first modulation strength are/is determined during at least one first braking operation (S3a);
- for a second characteristic curve (k₁) that in each case has at least one redefined portion in comparison to the at least one first characteristic curve (k₀), a second frequency and/or a second modulation strength are/is determined during at least one second braking operation (S3b) ;
- the at least one first frequency and/or the at least one first modulation strength are/is compared with the second frequency and/or with the second modulation strength; and,
- if an increase of modulations and/or fluctuations of the input variable (xᵢₙₚᵤₜ) are established at least in portions along the second characteristic curve (k₁) with reference to the frequencies compared with one another, and/or an amplification of modulations and/or fluctuations of the input variable (xᵢₙₚᵤₜ) are established at least in portions along the second characteristic curve (k₁) with reference to the modulation strengths compared with one another, at least the at least one relevant portion of the characteristic curve (k₁) is redefined.

## Revendications

1. Dispositif de commande pour un dispositif de décélération de véhicule d'un véhicule, comprenant :
un équipement électronique qui peut être fixé à un élément d'actionnement de frein du véhicule et/ou à au moins un capteur d'élément d'actionnement de frein du véhicule de telle sorte qu'une évolution dans le temps d'une grandeur d'entrée (xᵢₙₚᵤₜ), prédéfinie par un conducteur du véhicule au moyen d'un actionnement de l'élément d'actionnement de frein, peut être évaluée au moyen de l'équipement électronique ; et
un équipement de stockage sur lequel est mémorisée une courbe caractéristique (k₀, k₁, k₂) qui prédéfinit une relation entre la grandeur d'entrée (xᵢₙₚᵤₜ) et une grandeur de consigne (a_{vehicle}) concernant une décélération de véhicule de consigne (a_{vehicle}) à appliquer au véhicule au moyen du dispositif de décélération de véhicule ;
l'équipement électronique étant conçu pour piloter le dispositif de décélération de véhicule en tenant compte de la courbe caractéristique (k₀, k₁, k₂) et de la grandeur d'entrée actuelle (xᵢₙₚᵤₜ) de telle sorte qu'une décélération de véhicule de consigne actuelle (a_{vehicle}) peut être appliquée au véhicule au moyen du dispositif de décélération de véhicule selon la courbe caractéristique (k₀, k₁, k₂) et la grandeur d'entrée actuelle (xᵢₙₚᵤₜ) ;
**caractérisé en ce que** :
l'équipement électronique est en outre conçu pour identifier au moins une modulation et/ou variation de la grandeur d'entrée (xᵢₙₚᵤₜ) , déclenchée (s) par le conducteur, et pour redéfinir une section de la courbe caractéristique (k₀, k₁, k₂) en tenant compte de ladite au moins une modulation et/ou variation de la grandeur d'entrée (xᵢₙₚᵤₜ), déclenchée (s) par le conducteur, et pour enregistrer sur l'équipement de stockage la courbe caractéristique (ko, k₁, k₂) modifiée en conséquence.

2. Dispositif de commande selon la revendication 1, dans lequel l'équipement électronique est en outre conçu pour déterminer une fréquence et/ou une intensité de modulation de modulations et/ou de variations déclenchées par le conducteur pendant au moins un freinage.

3. Dispositif de commande selon la revendication 2, dans lequel, dans la mesure où la fréquence déterminée se situe au moins par endroits le long de la courbe caractéristique (k₀, k₁, k₂) au-dessus d'une valeur seuil de fréquence prédéfinie et/ou l'intensité de modulation déterminée se situe au moins par endroits le long de la courbe caractéristique (k₀, k₁, k₂) au-dessus d'une valeur seuil d'intensité prédéfinie, l'équipement électronique est conçu pour redéfinir au moins ladite au moins une section concernée de la courbe caractéristique (k₀, k₁, k₂) et pour enregistrer sur l'équipement de stockage la courbe caractéristique (k₀, k₁, k₂) modifiée en conséquence.

4. Dispositif de commande selon la revendication 2, dans lequel l'équipement électronique est en outre conçu pour déterminer pour au moins une première courbe caractéristique (k₀) au moins une première fréquence et/ou au moins une première intensité de modulation pendant au moins un premier freinage, pour déterminer pour une deuxième courbe caractéristique (k₁) qui présente en comparaison avec ladite au moins une première courbe caractéristique (k₀) respectivement au moins une section redéfinie, une deuxième fréquence et/ou une deuxième intensité de modulation pendant au moins un deuxième freinage, pour comparer ladite au moins une première fréquence et/ou ladite au moins une première intensité de modulation avec la deuxième fréquence et/ou la deuxième intensité de modulation, et dans la mesure où du moins par endroits le long de la deuxième courbe caractéristique (k₁) une augmentation des modulations et/ou des variations de la grandeur d'entrée (xᵢₙₚᵤₜ) peut être déterminée à l'aide des fréquences comparées les unes aux autres et/ou du moins par endroits le long de la deuxième courbe caractéristique (k₁) une amplification des modulations et/ou des variations de la grandeur d'entrée (xᵢₙₚᵤₜ) peut être constatée à l'aide des intensités de modulation comparées les unes aux autres, pour redéfinir au moins ladite au moins une section concernée de la deuxième courbe caractéristique (k₁).

5. Dispositif de commande selon l'une quelconque des revendications précédentes, dans lequel l'équipement électronique est conçu pour examiner une évolution dans le temps d'une course de pédale, une évolution dans le temps d'une course de tige d'entrée, une évolution dans le temps d'une course différentielle, une évolution dans le temps d'une force de freinage de conducteur exercée sur l'élément d'actionnement de frein et/ou une évolution dans le temps d'une pression de maître-cylindre de frein dans un maître-cylindre de frein placé en aval de l'élément d'actionnement de frein en tant qu'évolution dans le temps de la grandeur d'entrée (xᵢₙₚᵤₜ) quant à une apparition éventuelle d'au moins une modulation et/ou variation de la grandeur d'entrée (xᵢₙₚᵤₜ) déclenchée (s) par le conducteur.

6. Dispositif de commande selon l'une quelconque des revendications précédentes, dans lequel la courbe caractéristique (k₀, k₁, k₂) prédéfinit une relation entre la grandeur d'entrée (xᵢₙₚᵤₜ) et une intensité de courant de consigne à délivrer à un servofrein placé en amont du maître-cylindre de frein, une relation entre la grandeur d'entrée (xᵢₙₚᵤₜ) et une vitesse de rotation de consigne d'un moteur du servofrein, une relation entre la grandeur d'entrée (xᵢₙₚᵤₜ) et une force d'amplification de consigne du servofrein, une relation entre la grandeur d'entrée (xᵢₙₚᵤₜ) et une pression de freinage de consigne dans au moins un cylindre de frein de roue d'un système de freinage hydraulique, une relation entre la grandeur d'entrée (xᵢₙₚᵤₜ) et un couple de freinage de consigne de l'au moins un cylindre de frein de roue et/ou une relation entre la grandeur d'entrée (xᵢₙₚᵤₜ) et la décélération de véhicule de consigne (a_{vehicle}).

7. Dispositif de commande selon l'une quelconque des revendications précédentes, dans lequel l'équipement électronique est conçu, en tenant compte de la courbe caractéristique (k₀, k₁, k₂) et de la grandeur d'entrée actuelle (xᵢₙₚᵤₜ), pour piloter en tant que dispositif de décélération de véhicule le servofrein placé en amont du maître-cylindre de frein, au moins un dispositif à piston et cylindre du système de freinage hydraulique et/ou au moins une pompe du système de freinage hydraulique.

8. Dispositif de décélération de véhicule pour un véhicule comprenant un dispositif de commande selon l'une quelconque des revendications précédentes.

9. Dispositif de décélération de véhicule selon la revendication 8, le dispositif de décélération de véhicule étant le servofrein, le dispositif à piston et cylindre, un système de pompe avec ladite au moins une pompe ou le système de freinage.

10. Procédé permettant de faire fonctionner un dispositif de décélération de véhicule d'un véhicule, comprenant les étapes consistant à :
déterminer une évolution dans le temps d'une grandeur d'entrée (xᵢₙₚᵤₜ) prédéfinie par un conducteur du véhicule au moyen d'un actionnement d'un élément d'actionnement de frein du véhicule (S1) ; et
piloter le dispositif de décélération de véhicule en tenant compte de la grandeur d'entrée actuelle (xᵢₙₚᵤₜ) et d'une courbe caractéristique (k₀, k₁, k₂), qui prédéfinit une relation entre la grandeur d'entrée (xᵢₙₚᵤₜ) et une grandeur de consigne (a_{vehicle}) concernant une décélération de véhicule de consigne (a_{vehicle}) à appliquer au véhicule au moyen du dispositif de décélération de véhicule, de sorte qu'une décélération de véhicule de consigne actuelle (a_{vehicle}) soit exercée sur le véhicule au moyen du dispositif de décélération de véhicule selon la courbe caractéristique (k₀, k₁, k₂) et la grandeur d'entrée actuelle (xᵢₙₚᵤₜ) (S2) ;
**caractérisé par** les étapes consistant à :
examiner l'évolution dans le temps de la grandeur d'entrée (xᵢₙₚᵤₜ) quant à une apparition éventuelle d'au moins une modulation et/ou variation de la grandeur d'entrée (xᵢₙₚᵤₜ) déclenchée (s) par le conducteur (S3) ; et
redéfinir au moins une section de la courbe caractéristique (k₀, k₁, k₂) en fonction de l'apparition éventuelle de ladite au moins une modulation et/ou variation de la grandeur d'entrée (xᵢₙₚᵤₜ) déclenchée (s) par le conducteur (S4).

11. Procédé selon la revendication 10, dans lequel une fréquence et/ou une intensité de modulation des modulations et/ou des variations déclenchées par le conducteur sont déterminées pendant au moins un freinage.

12. Procédé selon la revendication 11, dans lequel, dans la mesure où la fréquence déterminée se situe au moins par endroits le long de la courbe caractéristique (k₀, k₁, k₂) au-dessus d'une valeur seuil de fréquence prédéfinie et/ou l'intensité de modulation déterminée se situe au moins par endroits le long de la courbe caractéristique (k₀, k₁, k₂) au-dessus d'une valeur seuil d'intensité prédéfinie, ladite au moins une section concernée de la courbe caractéristique (k₀, k₁, k₂) est redéfinie.

13. Procédé selon la revendication 11, dans lequel :
- pour au moins une première courbe caractéristique (k₀), au moins une première fréquence et/ou au moins une première intensité de modulation sont déterminées pendant au moins un premier freinage (S3a) ;
- pour une deuxième courbe caractéristique (k₁), qui présente en comparaison avec ladite au moins une première courbe caractéristique (k₀) respectivement au moins une section redéfinie, une deuxième fréquence et/ou une deuxième intensité de modulation sont déterminées pendant au moins un deuxième freinage (S3b) ;
- ladite au moins une première fréquence et/ou ladite au moins une première intensité de modulation sont comparées avec la deuxième fréquence et/ou la deuxième intensité de modulation ; et
- dans la mesure où, du moins par endroits le long de la deuxième courbe caractéristique (k₁), une augmentation des modulations et/ou variations de la grandeur d'entrée (xᵢₙₚᵤₜ) est constatée à l'aide des fréquences comparées les unes aux autres, et/ou du moins par endroits le long de la deuxième courbe caractéristique (k₁), une amplification des modulations et/ou variations de la grandeur d'entrée (xᵢₙₚᵤₜ) est constatée à l'aide des intensités de modulation comparées les unes aux autres, au moins ladite au moins une section de la courbe caractéristique (k₁) est redéfinie.
